# EUROPEAN PATENT APPLICATION

(11) **EP 1 821 489 A1**
(43) Date of publication of application: **22.08.2007**
(21) Application number: 06290292.9
(22) Date of filing: 20.02.2006
(51) Int. Cl.: H04L 29/06

(54) **Method of managing real-time services and corresponding packet-based telecommunications network**

(71) Applicant: Alcatel Lucent, 75008 Paris (FR)
(72) Inventor: Tomsu, Marco, Dipl.-Ing., 71254 Ditzingen (DE); Domschitz, Peter, Dipl.-Ing., 70191 Stuttgart (DE); Oberle, Karsten, Dipl.-Ing. (FH), 68199 Mannheim (DE); Kessler, Marcus, Dr., 70329 Stuttgart (DE)
(74) Representative: Zinsinger, Norbert

(57) **Abstract**

The invention concerns a method of managing real-time services in a packet-based telecommunications network (1) of a plurality of coequal nodes (10 to 14) and a telecommunications network (1) for executing this method. A rule base (113) for each node (10 to 14) is defined in consideration of the capabilities of each node (10 to 14) and/or the capabilities of all of the nodes (10 to 14). After receiving information about an event requiring action (401,402,403), one or more of said nodes (10 to 14) determine node-specific action in consideration of said rule base (115) and node-specific aggregated data (114) as reaction to said event. Media data and/or signaling data associated with said real-time services are routed based on the determined action.

## Description

The present invention relates to a method of managing real-time services and a telecommunications network for executing said method.

NGN or IMS networks are characterised by a decided separation of media processing, signalling and service logic on a functional level (NGN = Next Generation Networks; IMS = Internet Protocol Multimedia Subsystem). In particular, the service logic is usually processed by a central server closely linked to a softswitch. Caused by a high number of interaction procedures between corresponding elements to process highly dynamic media-oriented services or to stand massive service usage, suchlike central approaches have to be considered as potential bottlenecks with regard to network performance and of course represent a single point of failure due to malfunction and attacks.

Furthermore, the composition of elements and functions, e.g., media processing units connected to application servers, today is realised in a static way which has to be configured by the operator.

NGN (IMS/TISPAN) networks are often enriched with intelligent session border elements, so-called SBCs (TISPAN = Telecoms & Internet converged Services & Protocols for Advanced Networks; SBC = Session Border Controller). SBCs are the first products aiming for a tight coupling of signalling and media processing but currently fail to offer the flexibility to react to new service requirements by exchange of the service logic or by involving other similar nodes on demand.

New disruptive network concepts with strong self-organisation capabilities, e.g., based on peer-to-peer approaches, like Skype, are used also for conversational services. However, today's solutions lack in offering real integration into operators' networks as it would be necessary to guarantee service quality and offer fast service update. As a general rule and on the contrary to that requirement, in peer-to-peer networks all value added revenue generating services are residing on the terminals and not in the operators' networks.

It is the object of the present invention to provide an improved method for managing real-time services.

The object of the present invention is achieved by a method of managing real-time services in a packet-based telecommunications network of a plurality of coequal nodes, whereby the method comprises the steps of defining a rule base for each node in consideration of the capabilities of each node and/or the capabilities of all other nodes, receiving information about an event requiring action, determining, by one or more of said nodes, node-specific action in consideration of said rule base and node-specific aggregated data as reaction to said event, and routing media data and/or signaling data associated with said real-time services based on the determined action. The object of the present invention is further achieved by a packet-based telecommunications network of a plurality of coequal nodes for managing real-time services, whereby the network comprises database resources with a rule base defined for each node in consideration of the capabilities of each node and/or the capabilities of all other nodes, media resources and signalling resources for receiving information about an event requiring action, and service logic for determining, by one or more of said nodes, node-specific action in consideration of said rule base and node-specific aggregated data as reaction to said event and routing media data and/or signaling data associated with said real-time services based on the determined action.

The present invention provides a distributed, highly scalable and robust self-organising telecommunications service network of coequal network nodes for packet-based session-oriented conversational and collaboration/community services over Internet, such as voice or multimedia conferencing, for carriers and enterprises. The network nodes have equal rights and are equipped with signalling, media and service logic capabilities as well as database resources, each acting in an autonomous way along common rules to achieve a flexible composite service processing.

Responding to operators' demand for fast time-to-market infrastructure solutions with nearly zero administration effort, the invention solves the problem of organising the media-oriented services through a network in an autonomous way, where highly dynamic service demands and at the same time massive load of signalling and transport/media processing can be handled. Moreover, the invention is robust against attacks and failures of parts of the network and highly flexible in service deployment.

The present invention describes network nodes which have equal rights and are equipped with signalling, media, and service logic capabilities as well as database resources, each acting in an autonomous way along common rules to achieve a flexible composite service processing.

The invention excels in scalability of services and subscribers, high availability and at the same time low OPEX due to a high grade of self-organization, e.g., by automatic incorporation of new elements with new capabilities (OPEX = Operational Expenditure). Likewise, the invention achieves low CAPEX due to flexible positioning and discovery of capabilities in the network (CAPEX = Capital Expenditure).

Further advantages are achieved by the embodiments of the invention indicated by the dependent claims.

According to a preferred embodiment of the invention, a node, once it has received information about an event requiring action, generates an event notification. The event notification may be distributed to all nodes, or to a selected number of nodes. The selection of a node may be based on information about the significance of a node with regard to a specific event. Preferably, the distribution pattern may be determined in consideration of said rule base of the nodes. Further, the distribution pattern may also be determined in consideration of said node-specific aggregated data of the nodes.

It is also possible that a node which receives information about an event requiring action forwards the received information to one or more of the other nodes, possibly without modifying the information. The node sending information about the event to one or more of the other nodes is called initial node, the one or more of the other nodes receiving information about the event from an initial node are called target nodes. Thus, each node, initial and target node, receives the same original information.

Preferably, a node aggregates information about the network status and/or the status of one or more of the other nodes before determining a node-specific action. Likewise, a node may also combine said node-specific aggregated data of one or more of the other nodes with its own node-specific aggregated data as a basis for determining a node-specific action. It is possible that nodes have means to recognise dynamic service demands, service changes and other events by combining status, related control information and signalling information, respectively, and measurements of media, signalling, and service logic entities. Preferably, different nodes have equal discovery and communication means to detect dynamic service demands, service changes and other events by combining state and measurement information across several nodes.

In another embodiment, each target node replies to an initial node with a feedback message if it receives information about an event, e.g. simply forwarded original information or a modified event notification message, from an initial node. The feedback message may simply acknowledge the reception of the information about an event. Preferably, the feedback message also informs the initial node about whether the target node is enabled and adapted to react to the event. For example, the event is a session hand-over request, but the target node has no resources to assist in the session hand-over. Then, the feedback message informs the initial node that a substitute for the target node must be found.

Preferably, the initial node, once it receives a negatory feedback message, determines one or more substitutes for the declining target node. It is also possible that a target node itself, once it determines that it has no resources to assist in the reaction to an event, determines one or more substitutes for itself. In both cases, the initial node or the target node, the search for and determination of one or more substitutes will be based on the rule bases of the searching nodes and/or the node-specific aggregated data.

According to another preferred embodiment of the invention, an appropriate detection mechanism, e.g., a time-out mechanism or a keep-alive mechanism, is utilised to detect if a target node, i.e., a node which has received information about an event from an initial node, is out of operation. This detection capability is particularly important if the target node itself is not able to inform other nodes about its inability to be responsive to an event. If it is determined by means of the detection mechanism that the target node is out of operation, another node may be informed about the detected out-of-operation state of the target node and initiate corresponding steps, such as forwarding the event information to other nodes which can act as substitutes for the out-of-operation target node.

According to another preferred embodiment of the invention, nodes have equal discovery and communication means to self-organise a dynamic reaction on above mentioned service events, induced by external signalling/control messages or internal measurements, in a collaborative way. Preferably, one or more nodes exchange information, e.g., information about said node-specific aggregated data or information about the status of a specific node or of the network, with other nodes of said one or more nodes.

It is possible that the nodes detect and pro-actively prevent from overload situations by autonomous re-organisation of distributed state information and databases, as well as dynamic re-routing of media signalling paths. A piece of information concerning a specific state of the network, e.g., the failure of a node, is distributed to one or more nodes of the network. For instance, after receiving the event notification, each node determines node-specific action. However, a node where a failure has occurred, may not be able to act and replies to the event notification with a failure notice. This failure notice may be automatically sent to one or more other nodes. Then these other nodes, on receipt of the failure notice, re-determine their node-specific action as reaction to said event in consideration of said state of the network, e.g., by taking into consideration tasks that would have otherwise by fulfilled by the failed node.

Accordingly, media and signaling data are re-routed as reaction to the detected state of the network. For example, signalling data that would normally have been sent to the failed node, have to be re-routed to one or more nodes taking over the tasks of the failed node. In a preferred embodiment, the nodes detect and compensate node failures by autonomous re-organisation of distributed state information and databases, as well as dynamic re-routing of media signalling paths.

According to another preferred embodiment of the invention, the network modifies the rule base of a node based on the event. It is possible that the multitude of nodes with their rule bases leads to a situation where two or more nodes would hamper each other's actions when strictly adhering to their rule bases. This may depend on the event and the data aggregated by the nodes. In such a case, the network, i.e., the nodes comprising the network, will adapt the rule base of one or more of the nodes, preferably the affected nodes, to overcome the interference. Preferably, the adaptation will be performed in consideration of the rule bases of the remaining nodes.

In a preferred embodiment, the communication among the nodes of the network is done via a middleware software protocol between the components (hardware & software) of the system. Preferably, a component-oriented middleware software protocol is used which is not a protocol like SIP (SIP = Session Initiation Protocol). In the architecture of the component-oriented middleware software protocol, the nodes play the role of the components endowed with cooperative logic. The nodes possess a higher intelligence than with with a software-oriented architecture where some kind of central entity exists.

According to another preferred embodiment of the invention, said service logic represented by the resources of the network nodes takes into consideration the processing of both signalling traffic and media traffic. In other words, the network integrates the information levels of media transport and signalling/control messages into a comprehensive approach. Media-related traffic and signalling- and control-related traffic is monitored, data about all types of traffic is aggregated, and decisions concerning the routing of media-related traffic, signalling-related traffic, and control-related traffic are taken in consideration of the aggregated data.

Preferably, the network realises the concept of dual homing. A terminal which is connected to the telecommunications network according to the present invention may be connected to two or more network nodes serving as access points of the terminal to the telecommunications network. Thereby, redundancy is achieved: In case one node fails as terminal access point, the one or more other nodes still provide the terminal with access to the telecommunications network. Preferably, the telecommunications network organises and makes use of redundant network attachments of terminals for signalling and media to avoid single point of failures in the network.

These as well as further features and advantages of the invention will be better appreciated by reading the following detailed description of presently preferred exemplary embodiments taken in conjunction with accompanying drawings of which:
- Fig. 1: is a block diagram of a telecommunications network according to an embodiment of the invention.
- Fig. 2: is a block diagram showing components of a node according to an embodiment of the invention.
- Fig. 3: is a block diagram showing components of a node according to another embodiment of the invention.
- Fig. 4: is a message flow diagram showing a part of the telecommunications network according to another embodiment of the invention.
- Fig. 5: is a message flow diagram showing a part of the telecommunications network according to still another embodiment of the invention.
- Fig. 6: is a message flow diagram showing a part of the telecommunications network according to a further embodiment of the invention.
- Fig. 7: is a message flow diagram showing a part of the telecommunications network according to an alternative embodiment of the invention.

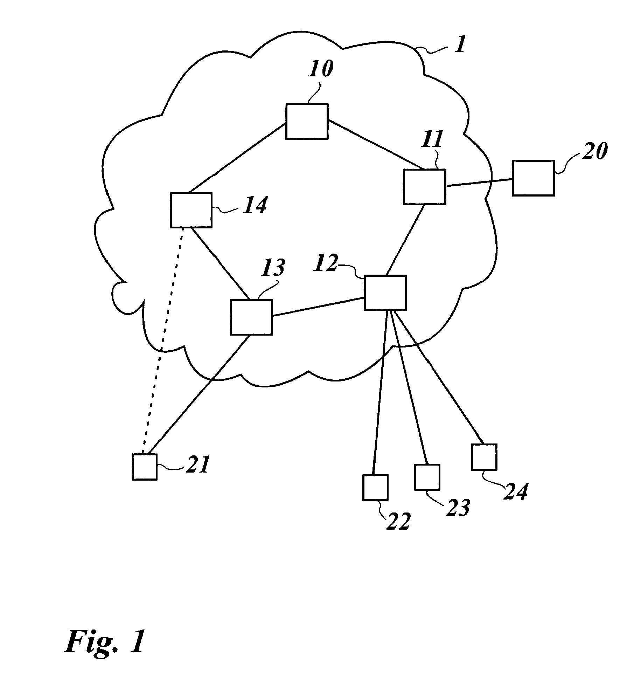

Fig. 1 shows a telecommunications network 1 comprising a plurality of coequal nodes 10 to 14. The telecommunications network 1 is a packet-based network used for session oriented conversational or community services. Preferably, the telecommunications network 1 services real-time and streaming services. For example, video transmission, telephone voice calls, or multimedia conferencing are carried out via the telecommunications network 1. In a preferred embodiment, the telecommunications network 1 represents an IP network such as the Internet or is a part of the Internet (IP = Internet Protocol).

For a plurality of terminals 20 to 24, the nodes 10 to 14 serve as access points to the telecommunications network 1. The terminals 20 to 24, which may be different kinds of real-time packet-enabled clients such as VolP telephones, mobile telephones, or video-conferencing terminals, may be connected to their respective access point node 10 to 14 via a wireline or a wireless interface (VoIP = Voice over IP). The terminal 20 is connected to the node 11, the terminals 22 to 24 are connected to the node 12, and the terminal 21 is provided access to the telecommunications network 1 by means of the nodes 13 and 14 (dual homing). The communication between the nodes 10 to 14 and the terminals 20 to 24 is established by means of the SIP protocol. Likewise, also the communication among the nodes 10 to 14 may be established by means of the SIP protocol.

With regard to the nodes 10 to 14, coequal in the sense of the invention does not mean that the nodes 10 to 14 are identical or that they all have the same capabilities. In fact, the nodes 10 to 14 may comprise different resources and have different capabilities. Coequal rather means that each node 10 to 14 has equal rights and is equal in value and standing with the other nodes 10 to 14 of the telecommunications network 1. Each node 10 to 14 has signalling, media and service logic capabilities, each acting in an autonomous way along common rules to achieve a flexible composite service processing.

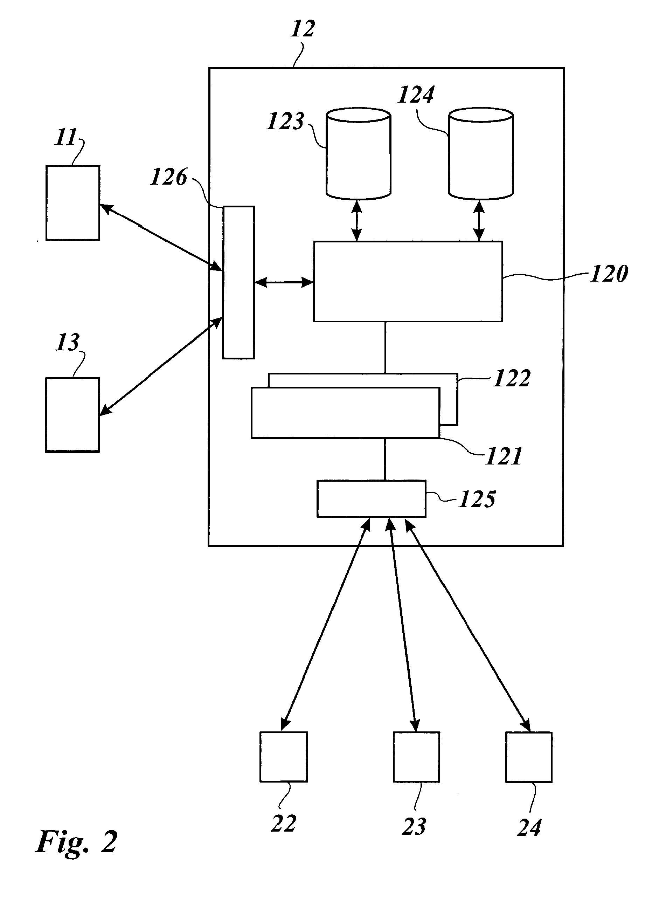

The nodes 10 to 14 are responsible that signalling and media traffic is routed in the right way across the telecommunications network 1 to a target node. The nodes 10 to 14 are in the following exemplified by means of the node 12, as shown in Fig. 2.

The node 12 is composed of one or several interlinked computers, i.e., a hardware platform, a software platform basing on the hardware platform and several application programs executed by the system platform formed by the software and hardware platform. The functionalities of the node 12 are provided by the execution of these application programs. The application programs or a selected part of these application programs constitute a computer software product providing a media and signaling routing service as described in the following, when executed on the system platform. Further, such computer software product is constituted by a storage medium storing these application programs or said selected part of application programs.

From a functional point of view, the node 12 comprises a control unit 120, resource units 121 and 122, a rule base 123, a database 124, and interface units 125 and 126.

The resource units 121 and 122 hold the resources that provide the node 12 with node-specific capabilities. For example, the resource units 121 and 122 comprise modules which provide the node 12 with the functionality of a media gateway controller, a call agent, a gatekeeper, a CSCF, a media server, or a signalling agent (CSCF = Call Session Control Function).

The rule base 123 comprises a set of rules. An initial set of rules may have been defined specifically for the node 12 before implementing the node 12 in the network 1. The rules stored in the rule base 123 enable the cooperation of the node 12 with the remaining nodes 10, 11, 13, 14 from a node-specific point of view. During operation, the node 12 refers to its rule base 123 for finding out about appropriate processing steps.

The database 124 holds, preferably node-specifically, measurement values and data aggregated during the operation of the node. For example, the database 124 may store address information and session ID information related to VolP telephone calls handled via the node 12.

The interface unit 125 enables data exchange with the terminals 22 to 24, and the interface unit 126 provides a communication channel to the other nodes 11 and 13. It is possible that the node 12 is connected with only one or few other nodes of the telecommunications network 1. In that case, signalling traffic and media traffic originating from the node 12 has to be routed in a hop-by-hop manner across several nodes to reach any node of the telecommunications network 1. It is also possible that each node is connected with all remaining nodes of the telecommunications network 1 via a direct connection. However, this approach requires many connections and is only practicable if the number of nodes in the telecommunications network 1 is relatively small.

The control unit 120 controls the functions of the node 12 and represents the service logic of the node 12. It provides an interface and coordinator between the signalling/control layer and the media/data layer of the traffic operated at the node 12. For its operation, the control unit 120 exchanges data with all node elements mentioned above. In particular, the control unit 120 refers to the rule base 123 and the database 124 for finding out about appropriate processing steps.

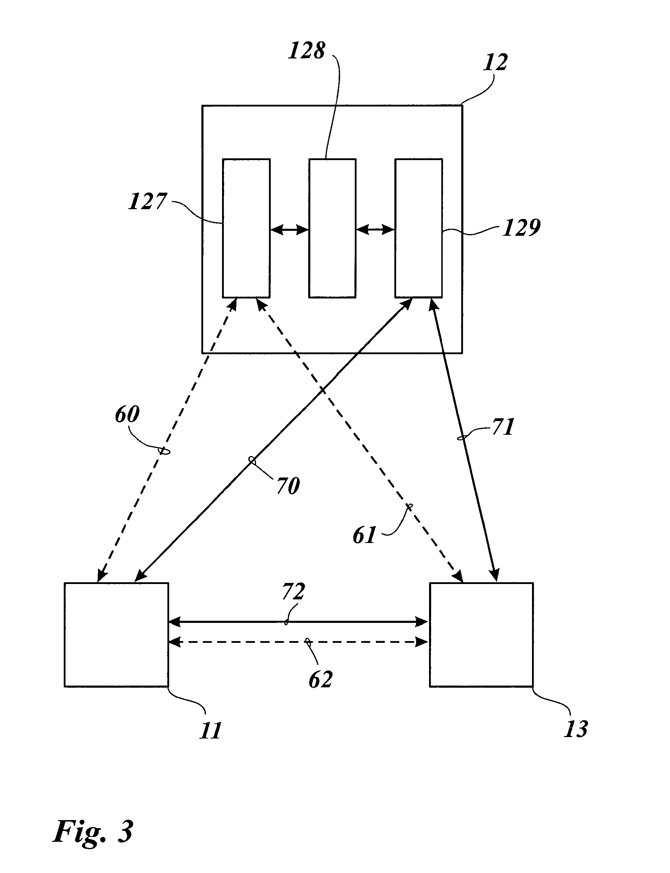

Fig. 3 shows the node 12 from another point of view. Fig. 3 is to illustrate the integrative and comprehensive character of the nodes 10 to 14. A component 127 represents the components of the node 12 which perform processing of signalling and control traffic. A component 129 represents the components of the node 12 which perform processing of media traffic. The signalling/control component 127 exchanges signalling/control data 60, 61 with the nodes 11 and 13. The media component 129 exchanges media data 70, 71 with the nodes 11 and 13. The nodes 11 and 13 also exchange both signalling traffic 62 and media traffic 72 among each other.

A control component 128 serves as a mediator and coordinator between the signalling/control component 127 and the media component 129.

The idea behind the telecommunications network 1 created by the plurality of nodes 10 to 14 is that the plurality of nodes 10 to 14 organises itself as a group with a cooperative manner. The cooperation between the nodes 10 to 14 may involve all resources of the group and all information that can be provided by all nodes 10 to 14. Preferably, if one of the nodes 10 to 14 drops out, the remaining nodes 10 to 14 take over the functions of the failed node 10 to 14. Due to this distributed approach, the telecommunications network 1 is less susceptible to interference than a central server.

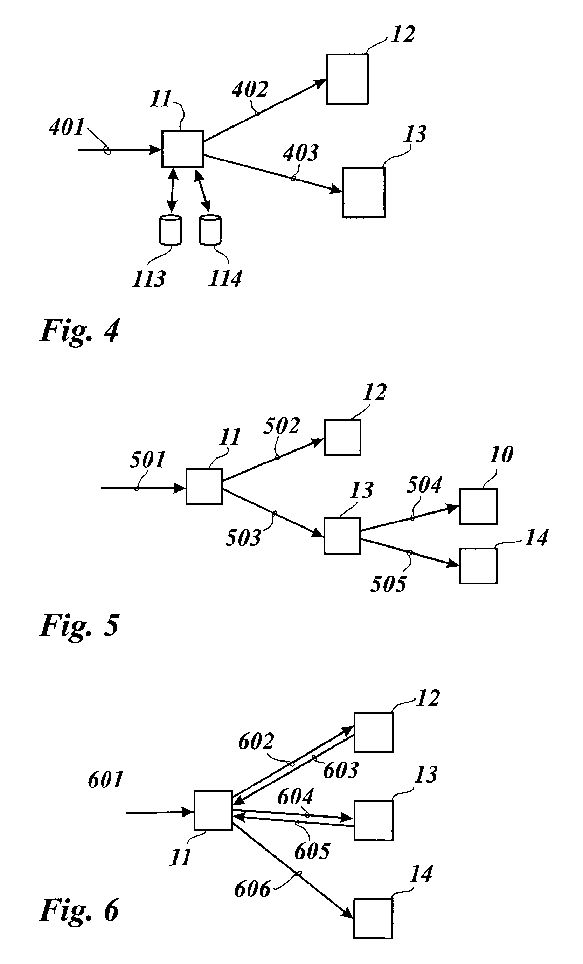

Fig. 4 shows a message flow among the nodes 11, 12 and 13 according to a first embodiment. The node 11 is informed about an event via message 401. The event may be a subscriber's request to establish a VolP telephone call or it may be a session hand-over request issued by a user of one of the terminal 20 to 24. Triggered by the event information message 401, the node 11 refers to the databases 113 and 114. The databases 113 may be a rule base specific for the node 11, the databases 114 may be a database with node-specific aggregated data. It is also possible that the database 114 is a central database which holds centrally aggregated data.

The node 11 retrieves from the databases 113 and 114 information about how to react to the indicated event. Based on the retrieved information, the node 11 generates an event notification and distributes the generated event notification in form of a message 402 to the node 12 and in form of a message 403 to the node 13. The messages 402 and 403 comprising event notifications will trigger the nodes 12 and 13 to determine reactions to the indicated event. Preferably, the nodes 12 and 13 again refer to rule bases and databases holding node-specific aggregated data.

In this way, the nodes 11, 12, 13 determine actions based on their node-specific rule bases and node-specific aggregated data. The rule bases comprise rules to achieve a certain, event-dependent goal. To react to a specific event, each node contributes the data and resources it has at its disposal.

For example, the nodes 10 to 14 may have distributed functions to detect mobility of the terminal 20 to 24 and services attached to the network 1 and means to organise the dynamic hand-over of session handling to one or more collaborating network nodes 10 to 14.

Fig. 5 shows a message flow among the nodes 10 to 14 according to another embodiment. In analogy to the case described above, the node 11 is informed about an event via message 501. The node 11 retrieves information about how to react to the indicated event. Based on the retrieved information, the node 11 generates an event notification and distributes the generated event notification in form of a message 502 to the node 12 and in form of a message 503 to the node 13. The node 12 is able to analyse the event notification message 502 and initiate appropriate measures.

After the node 13 has analysed the event notification message 503 and referred to its rule base and database, the node 13 determines that it has no resources to contribute to the actions needed for the indicated event: The node 13 is not able to initiate appropriate measures. It refers to its rule base and node-specific aggregated data and determines nodes where the event notification message should be processed instead. By means of messages 504 and 505, the node 13 hands over the tasks corresponding to the event notification message 503 to the other nodes 10 and 11.

It is also possible that the node 13 sends information about its state and aggregated data back to the initial node 11 and/or to the next nodes 10, 14.

This may assist the nodes 10, 14 to process the event notification messages 504, 505. Likewise, this may help the node 11 to adapt its rule base to the actual state of node 13. In a similar case, the node 11 would not address the node 13 any more but would redirect the event notification message directly to the nodes 10, 14.

In case the node 13 is unable to react to the event notification message 503 and inform the other nodes 10, 11, 14 about its out-of-operation state, a time-out mechanism or a keep-alive mechanism may notify one or more of the other nodes 10, 11, 14 about the out-of-operation state of the node 13. For example, the initial node 11 which has sent the event notification message 503 to the node 13 is notified by means of a time-out mechanism if the node 13 has not reacted within a pre-defined time limit to the event notification message 503. Thus the initial node 11 determines that the specific target node 13 is out of operation and can initiate means to react to the out-of-operation state of the node 13.

The algorithm for the distribution of routing information across the nodes may be realised in a way compensating probably out-dated routes by a redirect mechanism at the out-of-place target node. If the re-direction affects, besides the signalling, the media flow, a short-term optimisation of the media path is recommended. In any case, the update of the routing information should be triggered by the out-of-place or correct target node.

Fig. 6 shows a message flow among the nodes 11 to 14 according to another embodiment. In analogy to the case described above, the node 11 is informed about an event via message 601. The node 11 retrieves information about how to react to the indicated event. Based on the retrieved information, the node 11 generates an event notification and distributes the generated event notification in form of messages 602 and 604 to the nodes 12 and 13. The node 12 is able to analyse the event notification message 602 and initiate appropriate measures. The node 12 reports its positive state by means of a feedback message 603 back to the originating node 11.

The node 13, however, is unable to initiate appropriate measures. For example, its resources are not applicable to the indicated event or the node has a failure. The node 13 reports its negative state by means of a feedback message 605 back to the originating node 11. Then, the node 11 may retrieve, by means of aggregated data stored in a database, an alternative node 14 which takes over the functions of the node 13. The node 11 sends an event notification 606 to the node 14.

This means that, according to the present invention, the functions of a failed node are taken over by other nodes. This is achieved by cooperative inclusion of all resources and information of all nodes. It is possible that a specific state of the network, e.g., the failure of a node, is announced to all other nodes, each node determines the resources it can contribute instead of the failed node, and the contribution proposals are compiled at a node and distributed from there to all nodes. Then the nodes may "vote" for the best solution. Criteria that govern a vote for a certain solution may be the quality of a connection to a substitute node, the position of a substitute node, the workload of a substitute node, etc.

However, it is also possible that the rule base and the aggregated data enable the nodes to take over the functions of the failed node in a more elegant and fast manner without consulting with the other nodes. Through an intelligent coordination and adjustment of the rule bases, every node may know what to do and still contribute to the common goal.

To find appropriate nodes for the routing of signalling and media traffic, the telecommunications network 1, i.e., the nodes 10 to 14, may refer to both rule bases and node-specific aggregated data. For example, in case a subscriber wishes a session hand-over service from a first terminal to a second terminal, the node-specific aggregated data may comprise data about available terminals of the subscriber, presence of the subscriber, the subscriber's current position, the subscriber's current network attachments, the subscriber's status, etc. In legacy networks, many of those data are kept in a central database such as a home location register. In the present invention, a scalable routing database may be realised by distributing the database and the autonomous operation thereof across several network nodes 10 to 14.

The distributed database mentioned above may be combined with means for subscriber authentication and authorisation, and optionally enriched by subscriber oriented presence and preferences, accounting and billing information. A database realised in such a way may bear service provisioning related information.

It is also possible that nodes "publish their preferences", i.e., the nodes indicate in a manner "visible" to all other nodes what events they can contribute information and/or resources for. This also involves a tight integration of signalling traffic and media traffic, as can be provided by the nodes by help of the control units.

It is possible that the communication among the nodes is done via a standard protocol. It is also possible that the communication among the nodes is done by means of a dedicated control protocol which is tailored to the specific needs of the cooperative character of the telecommunications network 1.

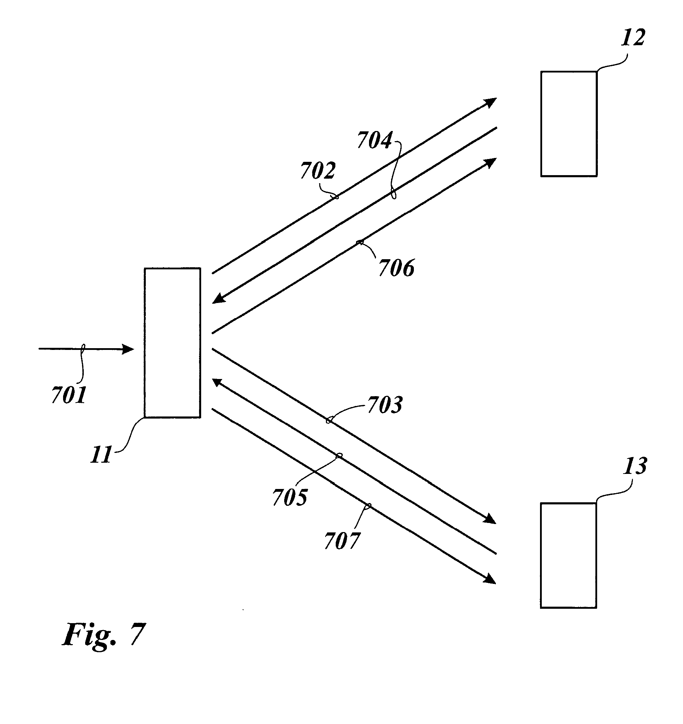

Fig. 7 shows a message flow among the nodes 11 to 13 according to still another embodiment. In analogy to the cases described above, the node 11 is informed about an event via message 701. The node 11 retrieves information about how to react to the indicated event, preferably from its rule base and/or a database holding node-specific aggregated data. Based on the retrieved information, the node 11 generates an event notification and distributes the generated event notification in form of messages 702 and 703 to the nodes 12 and 13. The nodes 12 and 13 analyse the event notification messages 702 and 703 and refer to their rule bases and databases comprising aggregated node-specific data with regard to the steps they could initiate in reaction to the indicated event.

After the determination of the appropriate steps that could be taken over by the nodes 12 and 13, the nodes 12 and 13 report the determined steps as well as related data back to the originating node 11 by sending messages 704 and 705. The node aggregates the data, adds its own data and sends the accumulated data in messages 706, 707 back to the nodes 12, 13.

Thus, first the knowledge related to a specific event is collected and then the collected knowledge is made available to all engaged nodes 11, 12, 13. It is possible that the nodes 11, 12, 13 update their rule bases according to the collected knowledge. In the case of a subscriber requesting a session hand-over, a first node endowed with the functionality of a signalling sever may indicate that it could settings of the codec. Another node may indicate that it has information about the current position of the subscriber. All this information may be aggregated and made available to all nodes. Then, the nodes are at the same knowledge level to cooperatively determine the appropriate steps. Then a first node may release the signalling and the call state, while another server may take the signalling and the call state.

## Claims

1. A method of managing real-time services in a packet-based telecommunications network (1) of a plurality of coequal nodes (10 to 14), whereby the method comprises the steps of:
defining a rule base (123) for each node (10 to 14) in consideration of the capabilities of each node (10 to 14) and/or the capabilities of all other nodes (10 to 14);
receiving information about an event requiring action;
determining, by one or more of said nodes (10 to 14), node-specific action in consideration of said rule base (123) and node-specific aggregated data as reaction to said event; and
routing media data and/or signaling data associated with said real-time services based on the determined action.

2. The method of claim 1,
**characterized in**
**that** the method comprises the further steps of:
distributing an event notification about said event or forwarding said received information about said event to one or more of the other coequal nodes (10 to 14) in consideration of said rule base (123) and said node-specific aggregated data.

3. The method of claim 1,
**characterized in**
**that** the method comprises the further steps of:
receiving information about an event requiring action by an initial node (10 to 14);
sending, by a target node (10 to 14), a feedback message to the initial node (10 to 14) after reception of information about said event from the initial node (10 to 14), whereby the feedback message comprises information about whether the target node (10 to 14) is able to contribute node-specific action as reaction to said event; and
determining, by the initial node (10 to 14), other nodes (10 to 14) as substitute for the target node (10 to 14) if the feedback message from the target node (10 to 14) informs the initial node (10 to 14) about the inability of the target node (10 to 14) to contribute node-specific action as reaction to said event.

4. The method of claim 1,
**characterized in**
**that** the method comprises the further steps of:
determining by a target node (10 to 14), after reception of information about said event from an initial node (10 to 14), other nodes (10 to 14) as substitute for the target node (10 to 14) if the target node (10 to 14) is unable to contribute node-specific action as reaction to said event.

5. The method of claim 1,
**characterized in**
**that** the method comprises the further steps of:
determining by means of a time-out mechanism or a keep-alive mechanism whether a target node (10 to 14) is out of operation;
initiating by another node (10 to 14) steps in reaction to the determined out-of-operation state of the target node (10 to 14).

6. The method of claim 1,
**characterized in**
**that** the method comprises the further step of:
exchanging, by each of said one or more nodes (10 to 14), said node-specific aggregated data with other nodes (10 to 14) of said one or more nodes (10 to 14).

7. The method of claim 1,
**characterized in**
**that** the method comprises the further step of:
adapting the rule base (123) of a node (10 to 14) based on the event and/or the aggregated data in consideration of the rule bases (123) of the remaining nodes (10 to 14).

8. A packet-based telecommunications network (1) of a plurality of coequal nodes (10 to 14) for managing real-time services, whereby the network (1) comprises database resources (123, 124) with a rule base (123) defined for each node (10 to 14) in consideration of the capabilities of each node (10 to 14) and/or the capabilities of all other nodes (10 to 14) and node-specific aggregated data, media resources and signalling resources (127, 129) for receiving information about an event requiring action, and service logic (120, 128) for determining, by one or more of said nodes (10 to 14), node-specific action in consideration of said rule base (123) and the node-specific aggregated data as reaction to said event and routing media data and/or signaling data associated with said real-time services based on the determined action.

9. The telecommunications network of claim 8,
**characterized in**
**that** said service logic (120, 128) is adapted to take into consideration both signalling traffic processing and media traffic processing.

10. The telecommunications network of claim 8,
**characterized in**
**that** two or more of said coequal nodes (10 to 14) provide a terminal (20 to 24) with redundant access points to the telecommunications network (1).
